# EUROPÄISCHE PATENTSCHRIFT

(11) **EP 4 030 887 B1**
(45) Veröffentlichungstag und Bekanntmachung des Hinweises auf die Patenterteilung: **19.03.2025**
(21) Anmeldenummer: 20780581.3
(22) Anmeldetag: 15.09.2020
(51) Int. Cl.: A01D 41/14

(54) **SCHNEIDWERK MIT BLATTFEDERPAKET ALS SCHNEIDELEMENTTRÄGER**
CUTTING MECHANISM WITH LEAF SPRING ASSEMBLY AS A CUTTING ELEMENT SUPPORT
TABLE DOTÉE D'UN EMPILEMENT DE LAMES DE RESSORT EN TANT QUE PORTE-ÉLÉMENTS DE COUPE

(30) Priorität: 19.09.2019 DE 102019125277
(43) Veröffentlichungstag der Anmeldung: 27.07.2022
(73) Patentinhaber: Carl Geringhoff GmbH & Co. KG, 59227 Ahlen (DE)
(72) Erfinder: SUDHUES, Steffen, 59227 Ahlen (DE); HEITKAMP, Alexander, 48249 Dülmen (DE); HEMMESMANN, André, 48336 Sassenberg (DE); POKRIEFKE, Michael, 27798 Hude (DE)
(74) Vertreter: Weeg, Thomas
(86) Internationale Anmeldenummer: PCT/EP2020/075718
(87) Internationale Veröffentlichungsnummer: WO 2021/052936

(56) Entgegenhaltungen:
- FR-A1- 2 324 219
- US-A- 4 414 793
- US-A- 4 599 852
- US-A- 5 464 371

## Beschreibung

Die vorliegende Erfindung bezieht sich auf ein Schneidwerk zum Anbau an eine Erntemaschine mit einem sich zumindest im Wesentlichen über die Arbeitsbreite des Schneidwerks erstreckenden Rahmen, der einen Anbaurahmen mit Anbaumitteln zur Verbindung mit einem Einzugskanal einer Erntemaschine aufweist, wobei der Rahmen in Arbeitsrichtung weisende Schwingen aufweist, an deren vorderen Enden Schneidelemente zum Schneiden des Ernteguts befestigt sind.

Üblicherweise sind Schneidwerke mit starren Rahmen versehen, an deren vorderen Enden Messerbalken mit einer Anzahl von nebeneinander angeordneten oszillierenden Messerklingen als ein Beispiel für Schneidelemente fest verbaut sind, die mit oszillierenden Messerbewegungen das am Messerbalken anstehende Erntegut von den auf dem Feld verbleibenden Stoppeln abschneiden, so dass es auf das Schneidwerk fallen und von dort über den Einzugskanal zu weiteren Verarbeitung an die Erntemaschine abgefördert werden kann. Mit solchen starren Rahmen und starr verbauten Messerbalken ist es allerdings insbesondere bei unebenen Bodenverhältnissen schwierig, Erntegut aufzunehmen, wenn das Erntegut dicht am Boden liegt, wie das beispielsweise bei Lagergetreide oder Soja der Fall ist. Auch kann es wünschenswert sein, das Erntegut möglichst nah am Boden abzuschneiden, sei es aus Gründen der Feldhygiene oder zur Erzielung eines möglichst hohen Strohertrages. Zwar sind Bodenkopiersteuerungen bekannt, mit denen die Schneidwerke dicht an Boden geführt werden sollen, diese reagieren aber häufig zu träge, um auch in schwierigen Bedingungen möglichst alles Erntegut zu erfassen und abzufördern. Auch ist die Bodenanpassung in Teilbreiten von starren Schneidwerken nicht möglich, was sich bei immer breiter werdenden Schneidwerken nachteilig auswirkt. Häufig werden die Schneidwerke auch wegen entsprechender Einstellungen durch die Fahrer der Erntemaschinen immer noch zu hoch geführt, um Beschädigungen durch Boden- oder Steinkontakte zu vermeiden.

Aus der Schrift WO 2007/095 430 A2 ist es bekannt, die Schwingen, an deren vorderen Enden der Messerbalken mit den Messerklingen befestigt ist, in einem Drehgelenk am hinteren Schneidwerksrahmen zu befestigen, so dass sich der Messerbalken mit den auf- und abwärts beweglichen Schwingen auch in Teilbereichen der Arbeitsbreite besser wechselnden Bodenkonturen anpassen kann. Es bleibt aber offen, wie die Schwingen möglichst bodennah gehalten werden sollen. Allein das Gewicht des Messerbalkens reicht nicht aus, um eine bodennahe Messerführung zu gewährleisten.

Aus der Schrift US 5,464,371 A ist es bekannt, eine starre schwenkbewegliche Schwinge, an deren vorderem Ende ein Messerbalken mit Messerklingen gehalten ist, mit einem Blattfederpaket abzustützen, damit sich das Schneidwerk flexibler den Bodenverhältnissen anpassen kann. Es bleibt bei einer Schwenkbewegung einer über ihre Länge starren Schwinge um eine Drehachse, die nur federnd abgestützt ist. Durch das Schwingungsverhalten der Blattfedern ist der Messerbalken jedoch nicht gleichbleibend dicht am Boden gehalten.

Die Schrift US 4,599,852 A zeigt als Schwinge jeweils eine einzige Blattfeder, die einen geschwungenen Verlauf hat, um frei schwingen zu können. Durch das freie Schwingen einer einzelnen Feder ist der Messerbalken nicht fest genug auf dem Boden führbar. Entsprechendes gilt für das in der Schrift US 2008/022646 A offenbarte Schneidwerk.

Die Schrift FR 2 324 219 A1 zeigt ein Schneidwerk mit einem Messerbalken, der von mehreren beabstandet voneinander angeordneten einzelnen Blattfedern gehalten ist.

Es ist die Aufgabe der vorliegenden Erfindung, ein Schneidwerk mit einer Halterung für die Schneidelemente zu schaffen, die sich leicht an die Bodenkontur anpasst, ohne dafür aber zu einem unkontrollierten Schwingen zu neigen.

Die Aufgabe wird für ein gattungsgemäßes Schneidwerk gelöst, indem mehrere oder alle Schwingen jeweils als ein aus mehreren Federblättern zusammengesetztes Blattfederpaket ausgebildet sind, mehrere flach aufeinanderliegenden Federblätter als Blattfederpaket an ihrem rahmenseitigen Ende gemeinsam zwischen Spannelementen am Rahmen gehalten sind, nur ein oder mehrere der im oberen Bereich des Blattfederpakets angeordneten Federblätter mit den Schneidelementen verbunden sind und ein oder mehrere der zwischen den Spannelementen am Rahmen gehaltenen und im unteren Bereich des Blattfederpakets angeordnete Federblätter in Arbeitsrichtung gesehen vor der Verbindungzone der im oberen Bereich des Blattfederpakets angeordneten Federblätter mit den Schneidelementen enden.

Durch den Einsatz eines erfindungsgemäß ausgestalteten Blattfederpakets ergibt sich ein genauer auf den Anwendungszweck angepasstes Federverhalten. Die mehrlagig an ihrem rahmenseitigen Ende am Rahmen gehaltenen Federblätter stützen sich bei Federbewegungen gegenseitig ab. Durch Reibung, die auf den einander zugewandten Flächen der Federblätter bei Federbewegungen auftritt, werden Federbewegungen zusätzlich gedämpft, insbesondere solche Federbewegungen, bei denen die Federblätter nach unten hin ausschwingen.

Indem nicht alle Federblätter, die am Rahmen gehalten sind, mit den Schneidelementen verbunden sind, ergibt sich ein besonders weiches und reaktionsschnelles Einfederverhalten - also eine Federbewegung nach oben hin - derjenigen Federblätter, die mit den Schneidelementen verbunden sind. Insbesondere zu Beginn der Einfederbewegung aus einer Ruhelage, die vor allem aus der Verformung der mit den Schneidelementen direkt verbundenen Federblätter geleistet wird, bauen sich noch keine hohen Rückstellkräfte in diesen Federblättern auf. Geringe Einfederbewegungen sind deshalb besonders feinfühlig möglich. Wirkt der Bodendruck, der die bereits begonnene Ausweichbewegung ausgelöst hat, weiter fort, beispielsweise, weil die Bodenfläche unter den Schneidelementen weiter ansteigt, so erhöhen sich auch die in diesen Federblättern aufgebauten Rückstellkräfte zunehmend. Außerdem stützen sich die mit den Schneidelementen verbundenen Federblätter bei einer fortschreitenden Einfederbewegung zunehmend auf den zusätzlich vorhandenen Federblättern ab, die dann ihrerseits Rückstellkräfte durch Umformung aufbauen. Eine Einfederbewegung wird auf diese Weise durch progressiv ansteigende Rückstellkräfte abgebremst. Diese Rückstellkräfte sorgen bei größeren Einfederbewegungen dafür, dass der oder die ausgelenkten Federblätter die Schneidelemente sehr schnell wieder in die Ausgangslage zurückbewegen, wenn sich der einwirkende Bodendruck auf die Schneidelemente wieder verringert.

Werden die im oberen Bereich des Blattfederpakets angeordneten Federblätter, die mit den Schneidelementen verbunden sind, durch einen auf die Schneidelemente einwirkenden Bodendruck nach oben hin ausgelenkt, machen sich die darunter angeordneten Federblätter weniger dämpfend bemerkbar, so dass eine Ausweichbewegung nach oben hin nur wenig gedämpft ist. Auch die Reibung der Federblätter aufeinander ist bei einer nach oben gerichteten Federbewegung weniger ausgeprägt. Indem die im unteren Bereich des Blattfederpakets angeordneten Federblätter in Arbeitsrichtung gesehen vor der Verbindungzone der im oberen Bereich des Blattfederpakets angeordneten Federblätter mit den Schneidelementen enden, werden erhöhte Bodendruckkräfte, die sich aus einem im Bereich der Schwinge ansteigenden Bodenniveau ergeben und auf die Schneidelemente einwirken, nicht unmittelbar auf diese Federblätter übertragen. Die Bodendruckkräfte wirken deshalb insbesondere auf die im oberen Bereich des Blattfederpakets angeordneten, mit den Schneideelementen verbundenen Federblätter ein und biegen diese nach oben hin hoch, solange sie auf diese Federblätter einwirken und stark genug sind, um diese Federblätter nach oben hin aufzubiegen. Bei einer abwärts gerichteten Federbewegung legen sich die im oberen Bereich des Blattfederpakets befindlichen Federblätter aber wieder auf die darunter befindlichen Federblätter auf, sie werden dadurch in der Abwärtsbewegung abgestützt und gebremst. Das gilt insbesondere dann, wenn die im oberen Bereich angeordneten Federblätter über die Nulllage hinaus nach unten ausfedern würden, wenn sie in dieser Bewegung nicht durch die im unteren Bereich angeordneten Federblätter aufgefangen und abgebremst würden.

Über die Auswahl der Zahl, des Materials, der Materialdicke, der Länge und der Positionierung der zu einem Paket gebündelten Federblätter ergibt sich ein Federverhalten, das einerseits ein schnelles und leichtes Ausweichen derjenigen Federblätter zulässt, an denen die Schneidelemente gehalten sind, wenn diese auf Bodenerhebungen auftreffen, andererseits aber die Schneidelemente mit den bei der Einfederbewegung aufgebauten Rückstellkräften wieder nach unten drückt, sobald sich der auf die Schneidelemente einwirkende Bodendruck wieder verringert, ohne dass dabei unerwünschte fortdauernde Schwingungsbewegungen auftreten. Durch die Dämpfung einer Schwingungsbewegung nach unten wird eine sinuskurvenartige Nachfederbewegung weitgehend unterbunden. Die einzelnen Federblätter verfügen dazu über eine Materialelastizität, die eine Vielzahl von Ein- und Ausfederbewegungen im Rahmen der im normalen Betrieb des Schneidwerks auftretenden Biegekräfte zulässt, ohne dass die Federblätter dabei verspröden und durch Materialermüdung brechen. Die Federblätter nehmen aufgrund ihrer Elastizität wieder ihre Ursprungsform und -lage ein, wenn die aus dem Bodendruck auf sie einwirkende Kraft wieder wegfällt.

Die Reaktionsschnelligkeit der aus mehreren Federblättern zusammengesetzten Blattfederpakete ist gegenüber dem vorbekannten Stand der Technik auch durch eine geringere Massenträgheit verbessert, weil auf starr ausgebildete Schwingen gänzlich verzichtet werden kann. Die Einfederbewegungen sind flexibler, weil die einzelnen oder mehreren Federblätter, an denen die Schneidelemente befestigt sind, nahezu über ihre volle Länge insbesondere aufwärts beweglich sind, während starr ausgebildete Schwingen nur um ihren Drehpunkt drehbeweglich auf einen erhöhten Bodendruck ausweichen können und die an einem Punkt ihrer Teillänge angreifenden Federn zwangsläufig kürzer sein müssen, woraus sich ein weniger flexibles Federverhalten und deutlich schlechteres Anfederverhalten ergibt.

Durch die Anbindung des Federpakets am Rahmen mittels Spannelementen ist das Blattfederpaket gut montierbar. Die Spannelemente liegen zumindest auf der Ober- und Unterseite des Blattfederpakets auf gegenüberliegenden Flächen auf und drücken dabei das Blattfederpaket von außen so zusammen, dass diese in Längsrichtung nicht mehr beweglich sind. Über die mit dem Rahmen verbundenen Spannelemente werden die Tragkräfte gut in den Rahmen des Schneidwerks übertragen. Die Spannelemente erlauben den Blattfedern aber elastische Federbewegungen über ihre gesamte Länge, die bei einer festen Anbindung der Blattfedern am Rahmen in der Anbindungszone nach einiger Zeit zu Sprödbrüchen führen würden.

Nach einer Ausgestaltung der Erfindung ist/sind zumindest eines oder mehrere der an ihrem rahmenseitigen Ende gemeinsam zwischen Spannelementen am Rahmen gehaltenen Federblätter mit den Schneidelementen verbunden und weisen Ausnehmungen zur Durchführung von Verbindungselementen auf, die auf der Ober- und Unterseite des Federblatts oder der Federblätter aufgelegte Befestigungsplatten zur Anbindung der Schneidelemente an die Schwinge miteinander verbinden. Einige wenige Federblätter sind noch ausreichend flexibel, um eine leichte Bodenanpassung der an den Schwingen gehaltenen Schneidelemente zu ermöglichen. Durch die Verwendung von zumindest zwei Federblättern, die aufeinander gehalten sind, können die Reibungskräfte bei Schwingungsbewegungen der Federblätter genutzt werden, um die Schwingungsbewegungen zu dämpfen. Damit sich das zweite Federblatt bei Federbewegungen gegenüber dem ersten Federblatt relativ in Schubrichtung bewegen kann, muss die Ausnehmung in dem zweiten Federblatt als Langloch ausgeführt sein, in das bevorzugt eine Hülse zur Durchführung des Verbindungselements eingesetzt ist. Das gilt entsprechend für weitere Federblätter, soweit vorhanden. Die Befestigung der Schneidelemente an einem oder mehreren Federblättern über Befestigungsplatten, die miteinander verbunden sind, ermöglicht flexible Bewegungen der Federblätter, ohne dass es in der Verbindungszone zwischen den Schneidelementen und den Federblättern zu Sprödbrüchen kommt, die bei einer festen Anbindung auftreten könnten.

Nach einer Ausgestaltung der Erfindung ist an der Unterseite der Blattfederpakete jeweils eine Zugstrebe angebracht, die mit ihrem vorderen Ende am vorderen Abschnitt eines Blattfederpakets mit diesem verbunden ist und sich von dort nach hinten in Richtung des Rahmens erstreckt, wo sie in einem Langloch beweglich gehalten ist und die vorderen und hinteren Enden des Langlochs einen Anschlag für Bewegungen des Blattfederpakets bilden. Über die Zugstrebe werden die Schwingbewegungen, die die Federblätter der Blattfederpakete ausführen können, mittels der Anschläge beschränkt. Solange sich die Zugstrebe mit ihrem hinteren Ende innerhalb der Länge des Langlochs bewegt, ist eine Ein- oder Ausfedern des Blattfederpakets und der Federblätter nicht durch die Anschläge beschränkt und frei. Schlägt die Zugstrebe aber an einem Anschlag an, ist eine weitere Ein- oder Ausfederbewegung unmittelbar gestoppt. Die Federbewegungen der Schwingen können dadurch in einem Bereich gehalten werden, in dem eine flexible Anpassung der Schneidorgane an Veränderungen in der Oberflächenkontur des bearbeiteten Feldes sinnvoll ist, wie beispielsweise eine Einfederbewegung der Schneidelemente aus einer Neutralstellung bis zu 15 cm in die Höhe. Größere Höhenveränderungen in der Lage der Schneidelemente müssen dann durch andere Stellorgane, wie beispielsweise eine entsprechende Höhenverstellung des Einzugskanals der Erntemaschine, Tragelementen am Einzugskanal der Erntemaschine, Bodenabstützungen wie beispielsweise einem höhenverstellbaren Radfahrwerk oder dergleichen vorgenommen werden. Die Zugstrebe kann einen Überlastungsschutz wie beispielsweise einen Scherbolzen oder eine gezielte Materialschwächung an den Verbindungsbauteilen aufweisen, der die Verbindung der Zugstrebe zum Langloch trennt, wenn eine Last auf den Überlastungsschutz einwirkt, die den zulässigen Grenzwert überschreitet. Ein solcher Überlastungsschutz ermöglicht dem Blattfederpaket eine Einfederbewegung, die über den vom Langloch begrenzten Bereich hinausgeht und die größere Schäden am Schneidwerk vermeiden hilft. Die Zugstrebe selbst kann längenelastisch sein, um harte Anschläge zu vermeiden. Genauso können im Langloch Dämpfer im Bereich der Endanschläge angeordnet sein.

Nach einer Ausgestaltung der Erfindung weist das Schneidwerk Sensoren auf, die die Bewegungen der Zugstreben in den jeweiligen Langlöchern erfassen und die Sensoren ein der jeweiligen Schwenklage entsprechendes Lagesignal an eine mit den Sensoren verbundene Auswerteelektronik übermitteln. Über die Sensorik erhält die Auswerteelektronik Informationen darüber, ob die Blattfederpakete überhaupt Ausweichbewegungen ausführen und wie stark die Schneidelemente zu einem Zeitpunkt oder über ein betrachtetes Zeitintervall eingefedert sind. Die von den Sensoren übermittelten Bewegungsdaten lassen Rückschlüsse darauf zu, ob das Schneidwerk tief genug abgesenkt ist, um die Flexibilität der Blattfederpakete überhaupt zu nutzen und um das Erntegut möglichst bodennah zu schneiden, sie weisen auf eine zu tiefe Schneidwerksführung hin, und sie lassen Rückschlüsse darauf zu, wie uneben die zu bearbeitende Fläche ist. Aus der Geschwindigkeit der Bewegungen lässt sich auch ablesen, ob es sich um gleitende Veränderungen in der Bodenoberfläche wie Kuppen oder Mulden handelt oder ob im Feld Steine liegen, die eine schnelle Ausweichbewegung erzwingen. Die Beobachtung der Bewegungen der Zugstreben über Sensoren können von der Auswerteelektronik für eine Anzeige der Bewegungen und/oder des verbleibenden Restfederweges verwendet werden, es können Warnsignale ausgegeben werden, wenn die Anschläge erreicht werden, und/oder es können Stellempfehlungen an den Fahrer der Erntemaschine und/oder Stellsignale an schneidwerks- und/oder erntemaschinenseitig vorhandene Regelungssysteme zur Höhenführung des Schneidwerks ausgegeben werden, die zu einer automatischen Verstellung der Höhenlage des Schneidwerks und/oder zu einer Verdrehung des Schneidwerks um die in Fahrtrichtung weisende Drehachse führen.

Nach einer Ausgestaltung der Erfindung sind auf einem oder mehreren Blattfederpaketen eine oder mehrere Abstützelemente aufgesetzt, die oberhalb des Blattfederpakets befindliche Förderflächen abstützen. Die Abstützelemente umfassen einzelne Blattfedern oder ein Blattfederpaket, um eine Verbindung einer Förderfläche mit dem jeweiligen Blattfederpaket herzustellen. Die Förderfläche kann aktiv angetrieben sein, wie beispielweise bei einem umlaufenden Bandförderer, oder es handelt sich um eine passive Förderfläche wie beispielsweise ein Bodenblech, auf dessen Oberseite das geschnittene Erntegut in die Richtung des Einzugskanals bewegt wird. Durch die Bewegungen eines Blattfederpakets sind auch die Förderflächen mit dem Blattfederpaket beweglich und benötigen eine besondere Unterstützung. Ein Abstützelement beeinträchtigt die Federbewegungen des jeweiligen Blattfederpakets nicht. Sie ermöglicht es aber, eine oberhalb des Blattfederpakets befindliche Förderfläche so auf dem Blattfederpaket abzustützen, dass diese den Federbewegungen des Blattfederpakets folgt. Da auch die an dem Blattfederpaket befestigten Schneidelemente den Federbewegungen des Blattfederpakets folgen, treten auch bei Ein- oder Ausfederbewegungen der Blattfederpakete kaum Veränderungen in der relativen räumlichen Lage der Schneidelemente und der Förderflächen zueinander auf. Die Abförderung des geschnittenen Ernteguts wird dadurch trotz der ständigen möglichen Ein- und Ausfederbewegungen der Blattfederpakete nicht beeinträchtigt. Aufwendige Abstützungen der Förderflächen am Rahmen des Schneidwerks und zusätzliche technische Vorkehrungen gegen Verschlechterungen im Erntegutfluss und Erntegutverluste können dadurch entfallen. Wenn auf einem Federblatt oder einem Blattfederpaket mehrere Abstützelemente angeordnet sind, ist es möglich, eine Förderfläche an mehreren Stellen abzustützen, beispielsweise im vorderen Bereich nahe den Schneidelementen und im hinteren, dem von den Schneidelementen entfernteren Bereich. Da die Federbewegungen eines Federblatts oder eines Federpakets in dem von den Schneidelementen entfernteren Bereich schwächer ausfallen als in dem Bereich, der unmittelbar zu den Schneidelementen benachbart ist, ergibt sich aus der Kombination einer den Schneidelementen benachbarten und zusätzlich entfernteren Abstützung eine Beruhigung des Federverhaltens der mehrfach abgestützten Förderfläche über seine Arbeitsbreite. Bei einer Federbewegung eines Federblatts oder eines Blattfederpakets ergeben sich dann Veränderungen des Anstellwinkels der Förderfläche zu den Schneidelementen.

Nach einer Ausgestaltung der Erfindung ist zumindest eines der Abstützelemente längsbeweglich mit der Schwinge verbunden. Durch Ein- und Ausfederbewegungen einer Schwinge ergeben sich nicht nur Veränderungen in der räumlichen Lage der Förderflächen in vertikaler Richtung, sondern auch in horizontaler Richtung. Das gilt insbesondere dann, wenn sich die Förderfläche den Übergang von den Schneidelementen zur Förderfläche abdichtend an die Schneidelemente anschließt, dann muss die Förderfläche in horizontaler Richtung jede Bewegung mitmachen, die die Schneidelemente ausführen, um Erntegutverluste zu vermeiden. Wenn eine feste räumliche Beziehung zwischen dem Abstützelement und der Förderfläche beibehalten werden soll, ist es vorteilhaft, wenn zumindest eines der Abstützelemente längsbeweglich mit der Schwinge verbunden ist, weil das Abstützelement dann den Bewegungen der Förderfläche in horizontaler Richtung durch seine entsprechende Beweglichkeit folgen kann. Die Längsbeweglichkeit soll dabei insbesondere in die Arbeitsrichtung und entgegen der Arbeitsrichtung gegeben sein. Bei Schwenkbewegungen der Schwinge bewegt sich das Abstützelement entlang der Längsachse der Schwinge. Das Abstützelement kann die Schwinge umgreifen, um sich durch den Formschluss geführt entlang der Schwinge zu bewegen, und/oder das Abstützelement ist durch Nuten in der Schwinge geführt, die in die Federn hineinragen, die an dem Abstützelement ausgebildet sind.

Nach einer Ausgestaltung der Erfindung ist das längsbewegliche Abstützelement in seiner Bewegung durch eine oder mehrere Koppelstangen beweglich angetrieben, die im vorderen Abschnitt der Schwinge oder des Schneidelements abgestützt sind. Die Koppelstangen sind in sich starr und definieren einen durch ihre Länge vorgegebenen Abstand zwischen zwei Punkten. Bei mehreren hintereinander angeordneten Koppelstangen, die durch eine bewegliche Achse verbunden sind, ergeben sich zwar geringfügige Längenveränderungen der Koppelstangen durch Einknickbewegungen, diese sind jedoch vernachlässigbar. Die Koppelstangen sind drehbeweglich mit ihren Anbindungspunkten verbunden. Verkürzt sich bei Aufwärts- oder Abwärtsbewegung der Schwinge der Abstand zwischen dem vorderen Abschnitt der Schwinge oder des Schneidelements und dem Punkt, an dem sich aktuell das mit den Koppelstangen verbundene Abstützelement befindet, so schieben die Koppelstangen das Abstützelement an der Schwinge entlang nach hinten, so dass der Abstand zwischen dem vorderen Abschnitt der Schwinge oder des Schneidelements und dem Abstützelement zumindest annähernd gleich bleibt. Schwingt die Schwinge in ihre Ausgangsstellung zurück und vergrößert sich dabei der Abstand zwischen dem vorderen Abschnitt der Schwinge oder des Schneidelements und dem Punkt, an dem sich aktuell das mit den Koppelstangen verbundene Abstützelement befindet, so ziehen die Koppelstangen das Abstützelement an der Schwinge entlang wieder nach vorne. Die Koppelstangen übertragen auf diese Weise eine Bewegung des Schneidelements bei Ein- und Ausfederbewegungen in Längsrichtung auf das Abstützelement. Mit der Abstützung im Bereich des vorderen Abschnitts der Schwinge ist ein Bereich gemeint, der dem von der Koppelstange bewegten Abstützelement vorgelagert ist. Je näher die vordere Abstützung der Koppelstange zum Schneidelement liegt, umso geringer fallen die Längendifferenzen aus, die sich infolge von Schwingungsbewegungen des Schneidelements im Verhältnis zum längsbeweglichen Abstützelement ergeben. Aber auch bei einer Abstützung des vorderen Endes der Koppelstange im mittleren Bereich der Schwinge ergeben sich brauchbare Verschiebebewegungen des Abstützelements. Das gilt insbesondere auch dann, wenn ein Teil des Abstands zwischen dem längsbeweglichen Abstützelement und dem Schneidelement durch ein anderes starres Bauteil als einer Koppelstange überbrückt ist.

Nach einer Ausgestaltung der Erfindung ist mit dem längsbeweglichen Abstützelement ein Halteelement verbunden, das die bewegliche Förderfläche begrenzt und über Mitnehmer führt. Durch seine Längsbeweglichkeit ist das Abstützelement gut dazu geeignet, auch bei Bewegungen der Förderfläche in horizontaler Richtung sicherzustellen, dass die Förderfläche dabei geführt ist. Das gilt insbesondere dann, wenn es sich um eine beweglich angetriebene Förderfläche handelt, wie das bei umlaufenden Förderbändern eines Draper-Schneidwerks der Fall ist. Im Halteelement kann beispielsweise eine Führungsnut ausgebildet sein, durch die ein am umlaufenden Förderband ausgebildeter und komplementär zur Führungsnut geformter Formkörper hindurchläuft. In Förderrichtung des umlaufenden Förderbands ergibt sich dadurch eine Führung, die das Förderband in der Sollposition hält. Das Halteelement kann auch dazu dienen, den Rand der Förderfläche gegen Erntegutverluste zu sichern, indem es Lücken zu angrenzenden Bauteilen schließt, beispielsweise durch entsprechende Leisten, Stege und Dichtungskörper, die auch aus einem elastischen Material hergestellt sein können.

Nach einer Ausgestaltung der Erfindung ist mit dem längsbeweglichen Abstützelement ein Halteelement verbunden, das eine bewegliche Rückwand des Förderwegs des Ernteguts über das Schneidwerk abstützt und führt. Bei Bewegungen der Förderfläche in horizontaler Richtung würden sich unterschiedlich große Spalte zwischen dem zur Rückwand benachbarten Rand der Förderfläche und der Rückwand ergeben, durch die Erntegut verloren werden kann und sich unerwünschte Materialansammlungen aufbauen könnten, die die Beweglichkeit der Bauteile einschränken und zu Beschädigungen an den Bauteilen führen könnten. Durch die beweglich gestaltete Rückwand kann diese den Bewegungen der Förderfläche in horizontaler und/oder vertikaler Richtung folgen. Indem nun das Halteelement so gestaltet ist, dass es die beweglich gestaltete Rückwand abstützt und führt, überträgt das Halteelement die Bewegungen der Schwinge auf die Rückwand. Die Rückwand bewegt sich dadurch synchron zur Förderfläche. Die Entstehung von unterschiedlich großen Spalten zwischen der Rückwand und der Förderfläche wird dadurch vermieden.

Nach einer Ausgestaltung der Erfindung dichtet das Haltelement den Übergang zwischen der Förderfläche und der Rückwand ab. Durch die zusätzliche Abdichtung werden Erntegutverluste und der Aufbau von Materialansammlungen vermieden.

Nach einer Ausgestaltung der Erfindung sind Abstützelemente benachbarter Blattfederpakete durch einen oder mehrere schwenkbeweglich mit den Abstützelementen verbundene Stege verbunden. Die schwenkbeweglichen Stege erlauben durch ihre schwenkbewegliche Anbindung zwar weiterhin Auslenkbewegungen einzelner Blattfedern oder Blattfederpakete, sie können allzu starke Auslenkbewegungen von einzelnen Blattfederpaketen in vertikaler Richtung aber dämpfen. Die Stege sind auch dazu geeignet, einzelne Federblätter oder ganze Blattfederpakete gegen eventuelle Bewegungen in eine Richtung quer zur Vorfahrtrichtung abzustützen. Die Stege sind auch dazu geeignet, Rückstellkräfte von einem Federblatt oder einem Blattfederpaket auf ein benachbartes Federblatt oder Blattfederpaket zu übertragen. Über die Arbeitsbreite eines Schneidwerks gesehen tragen die Stege dazu bei, dass Federbewegungen von einzelnen Federblättern und/oder Blattfederpaketen gedämpft und über die Arbeitsbreite des Schneidwerks geglättet werden.

Nach einer Ausgestaltung der Erfindung ist der vordere Abschnitt der Schwinge an dem mittleren Abschnitt der Schwinge über eine Drehmomentstütze abgestützt. Wenn das Schneidelement bei der Vorfahrt der Erntemaschine auf ein Hindernis stoßen sollte, das so geformt ist, dass die Schwinge diesem nicht durch eine Ausweichbewegung ausweichen kann, besteht das Risiko, dass das Schneidelement nach unten weggedrückt und dabei ganz umgeknickt werden könnte. Das Risiko ergibt sich insbesondere aus dem Umstand, dass das oder die Federblätter, an denen das Schneidelement befestigt ist, eine gewisse Flexibilität aufweisen. Um das Risiko eines ungewollten Wegknickens des Schneidelements zu verringern, wird der vordere Abschnitt der Schwinge an dem mittleren Abschnitt der Schwinge über eine Drehmomentstütze abgestützt. Die Drehmomentstütze ist bevorzugt starr ausgebildet. Sie ist an ihrem vorderen Ende mit dem Messerwinkel verbunden, an dem das Schneidelement befestigt ist, und an ihrem hinteren Ende mit einem Abstützelement, das an der Schwinge befestigt ist.

Nach einer Ausgestaltung der Erfindung ist ein Getriebe mit einer damit verbundenen Abtriebswelle zum Antrieb der Schneidelemente und/oder von Förderorganen zur Beförderung des Ernteguts im Rahmen in einem Langloch in Längsrichtung beweglich gehalten. Durch das in Längsrichtung bewegliche Getriebe werden Federbewegungen der Federblätter und/oder der Blattfederpakete erleichtert.

Nach einer Ausgestaltung der Erfindung ist die Federkennlinie der Federblätter eines Blattfederpakets einer Schwinge so ausgelegt, dass sie bei einer Auslenkung eines daran befestigten Schneidelements von 10 cm aus den aufgebauten Rückstellkräften einen Auflagedruck erzeugt, der in einem Bereich zwischen 15 kg und 80 kg liegt. Wenn die Federkennlinie so ausgelegt ist, ergibt sich ein guter Kompromiss zwischen einer bodennahen Führung der Schneidelemente und einer ausreichend flexiblen Reaktion auf Höhenveränderungen in der Kontur der mit dem Schneidwerk überfahrenen Fläche eines Feldes.

Nach einer Ausgestaltung der Erfindung sind in einem Schneidwerk Blattfederpakete verbaut, die unterschiedliche Federkennlinien aufweisen. Über die unterschiedlichen Federkennlinien kann der Auflagedruck, den die verschiedenen Schwingen erzeugen, an unterschiedliche Gewichtsbelastungen der einzelnen Schwingen angepasst werden, so dass sich über die Arbeitsbreite des Schneidwerks ein möglichst gleichmäßiger Auflagedruck ergibt.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nach-folgenden gegenständlichen Beschreibung und den Zeichnungen entnehmen.

Die Erfindung soll nun anhand von Ausführungsbeispielen näher erläutert werden. Es zeigen:
- Fig. 1:: eine Ansicht von schräg vorne auf eine Erntemaschine mit Schneidwerk,
- Fig. 2:: eine Ansicht auf ein Schneidwerk von hinten,
- Fig. 3:: eine Ansicht auf ein Schneidwerk aus einer Ansicht von schräg vorne und oben,
- Fig. 4:: eine Ansicht auf das in Fig. 3 gezeigte Schneidwerk, jedoch ohne die Förderorgane,
- Fig. 5:: eine Ausschnittansicht auf die Befestigungszone eines Blattfederpakets am Rahmen,
- Fig. 6:: eine Ausschnittansicht von schräg oben auf eine Schwinge,
- Fig. 7:: eine Ausschnittansicht von schräg unten auf eine Schwinge,
- Fig. 8:: eine Ausschnittansicht auf den Bereich einer Schwinge,
- Fig. 8a:: eine vergrößerte Ausschnittansicht einer Verbindungszone zwischen Federblättern und den Schneidelementen,
- Fig. 9:: eine Ansicht auf ein Blattfederpaket mit einem daneben angeordneten Getriebe,
- Fig. 10:: Federkennlinien von Schwingen, und
- Fig. 11:: eine Schnittansicht durch das Schneidwerk.

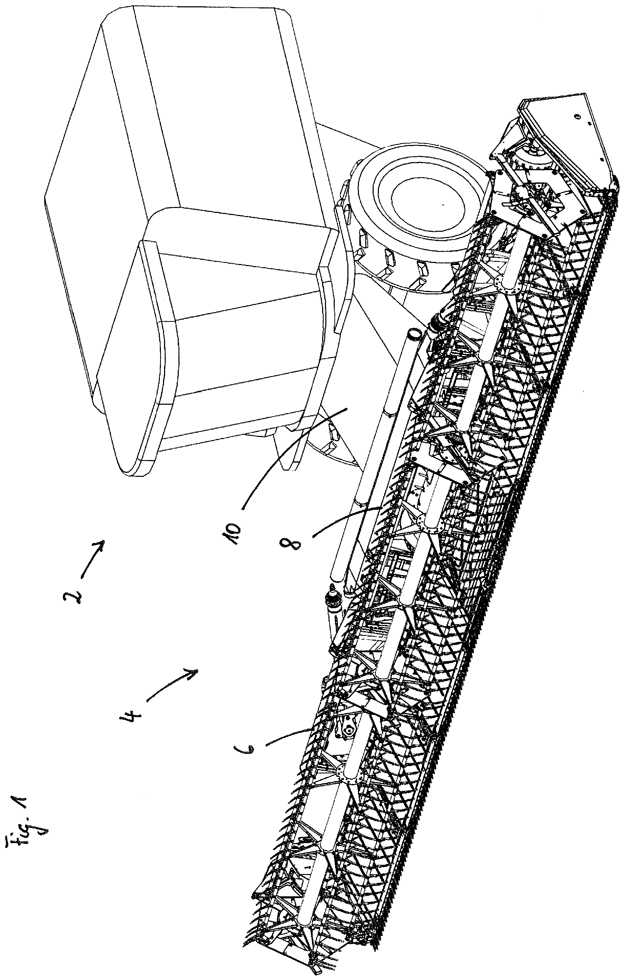

In Fig. 1 ist eine Ansicht von schräg vorne auf eine Erntemaschine 2 mit einem Schneidwerk 4 gezeigt. Das Schneidwerk 4 verfügt über einem Rahmen 6, der über einen Anbaurahmen 8 mit dem Einzugskanal 10 der Erntemaschine 2 verbunden ist.

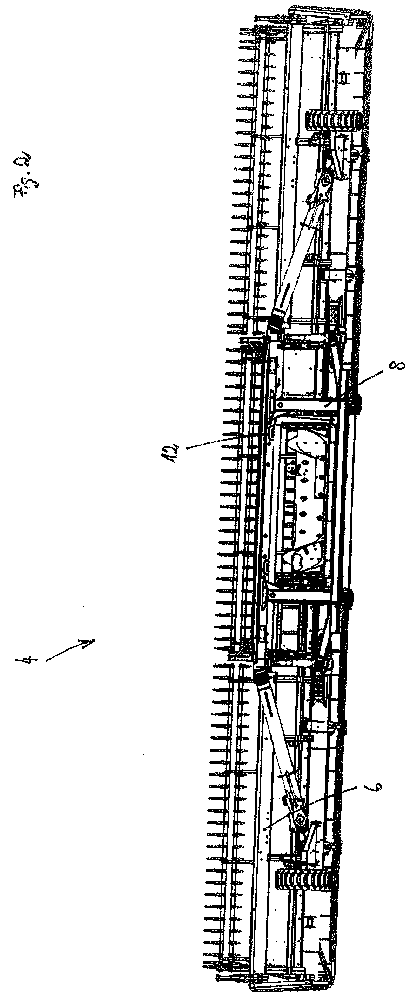

Aus der in Fig. 2 gezeigten Ansicht von hinten auf das Schneidwerk 4 ist erkennbar, dass an dem Anbaurahmen 8 Anbaumittel 12 wie beispielsweise Fanghaken angeordnet sind.

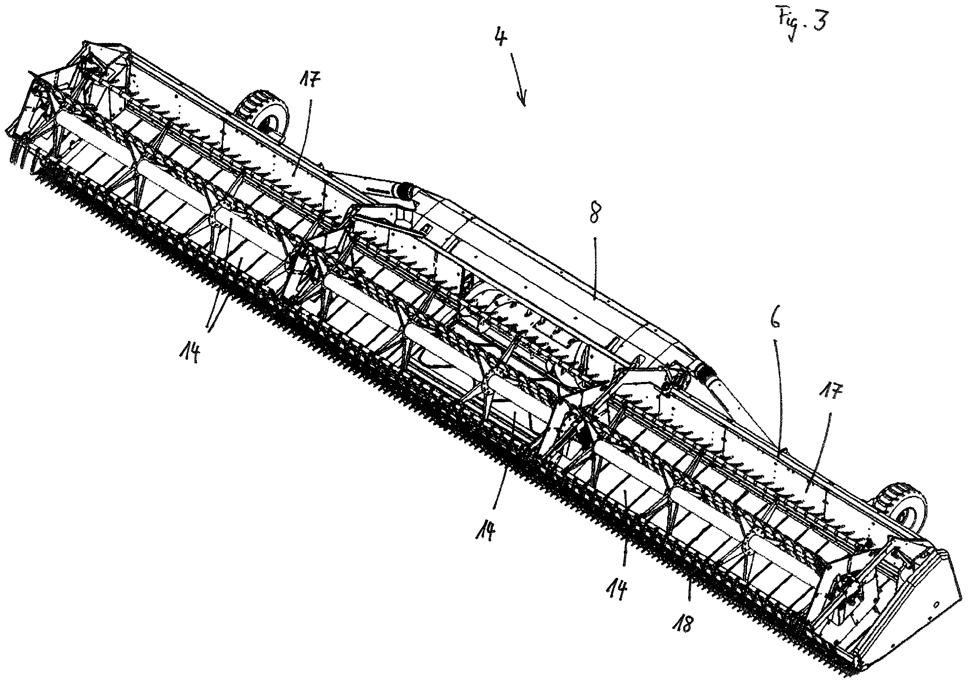

In Fig. 3 ist eine Ansicht auf ein Schneidwerk 4 aus einer Ansicht von schräg vorne und oben gezeigt. In dieser Ansicht ist erkennbar, dass das Schneidwerk eine Anzahl von Förderorganen 14. Im gezeigten Ausführungsbeispiel handelt es sich um endlos umlaufende Bandförderer, von denen zwei äußere Bandförderer das geschnittene Erntegut zur Mitte hin fördern und das Erntegut auf einen weiteren Bandförderer abwerfen, der das Erntegut nach hinten in Richtung des Einzugskanals 10 der Erntemaschine 2 abfördert. Anstelle der Bandförderer können in Schneidwerken 4 beispielsweise auch Förderschnecken verwendet werden, um das Erntegut abzufördern. Auch andere Förderorgane sind denkbar. Oberhalb der bodenseitigen Förderorgane 14 befindet sich noch als weiteres Förderorgan 14 eine Haspel, die bei einer rotierenden Bewegung mit den Haspelfingern und den Stangen, an denen die Haspelfinger befestigt sind, in das stehende Erntegut eintaucht, dieses abstützt, während die Halme bodennah abgeschnitten werden, und nach dem Schnitt die Halme auf den bodenseitigen Förderorganen ablegt.

An der Vorderseite des Schneidwerks 4 befindet sich ein Schneidelement 18 in Gestalt eines Messerbalkens. Der Messerbalken ist oszillierend angetrieben, um das Erntegut an seinen Stängeln oder Halmen zu schneiden. Je nach Erntegut und dessen Zustand ist es wünschenswert, das Schneidelement 18 möglichst bodennah zu führen, um Erntegutverluste zu vermeiden. So ist es beispielsweise bei Soja erforderlich, die Halme sehr dicht am Boden zu schneiden, um Verluste von Sojabohnen zu vermeiden. Genauso ist es im Lagergetreide vorteilhaft, möglichst bodennah zu schneiden, um auch dort Erntegutverluste zu vermeiden.

Das geschnittene Erntegut wird mit den Förderorganen 14 an der Rückwand 17 des Schneidwerks 4 entlang gefördert. Die Rückwand 17 ist geschlossen ausgebildet, um auch dort Erntegutverluste zu vermeiden.

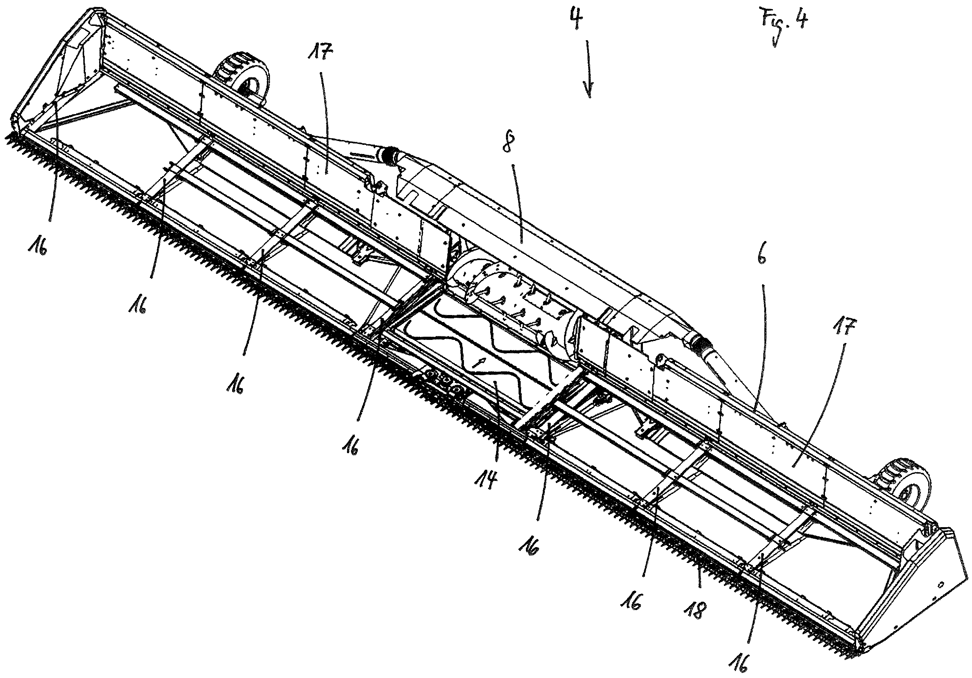

In Fig. 4 ist eine Ansicht auf das in Fig. 3 gezeigte Schneidwerk 4 dargestellt, wobei allerdings die Förderorgane im Bereich der Seitenrahmen weggelassen worden sind. Dadurch sind insbesondere die Schwingen 16 erkennbar, an denen das Schneidelement 18 gehalten ist. Zu sehen ist das mittlere Förderband als ein Beispiel für ein Förderorgan 14.

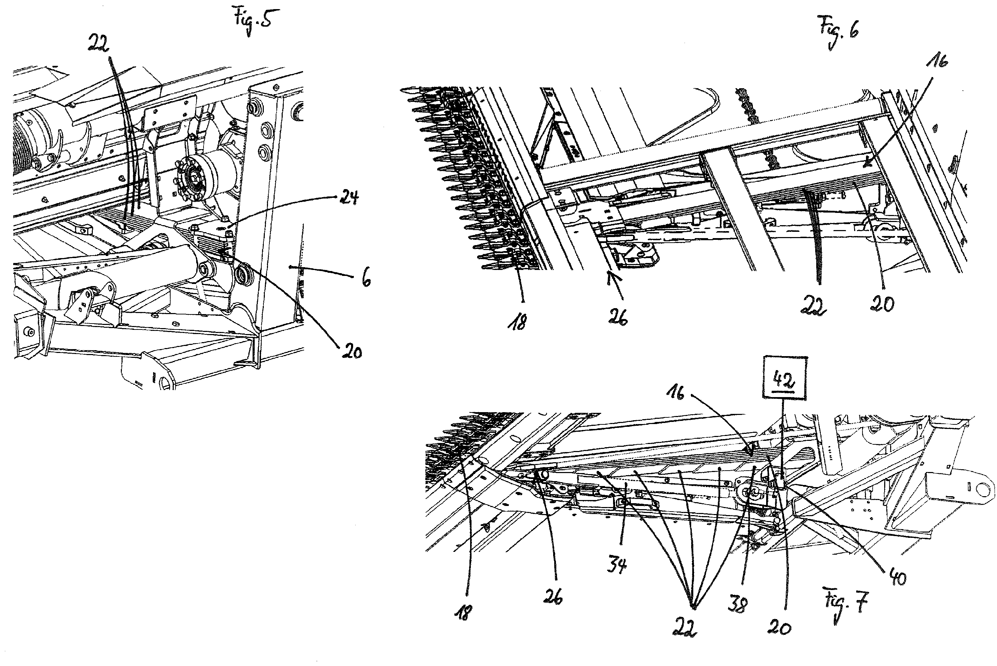

Mehrere oder alle Schwingen 16 bestehen aus Blattfederpaketen 20, die aus mehreren Federblättern 22 zusammengesetzt sind. Mehrere oder alle flach aufeinanderliegenden Federblätter 22 sind als Blattfederpaket 20 an ihrem rahmenseitigen Ende gemeinsam zwischen Spannelementen 24 am Rahmen 6 gehalten. Bei den Spannelementen 24 handelt es sich um Spannplatten, die über eine Verschraubung mit dem Rahmen 6 verbunden sind. Das ist in der Ausschnittansicht der Fig. 5 gut erkennbar.

In Fig. 6 ist eine Ausschnittansicht auf eine Schwinge 16 gezeigt. **In** der Ausschnittansicht in Fig. 6 ist erkennbar, dass nur zwei Federblätter 22 bis in den vorderen Bereich des Schneidwerks 4 hineinreichen, weil mehrere Federblätter 22 vorher enden. Bei den vorher endenden Federblättern 22 handelt es sich um diejenigen Federblätter 22, die sich unteren Bereich des Blattfederpakets 20 befinden. Diese enden in Arbeitsrichtung gesehen vor der Verbindungzone 26 der im oberen Bereich des Blattfederpakets 20 angeordneten Federblätter 22 mit den Schneidelementen 18. Dies ist in der Ansicht von unten gut erkennbar, die in der Fig. 7 gezeigt ist.

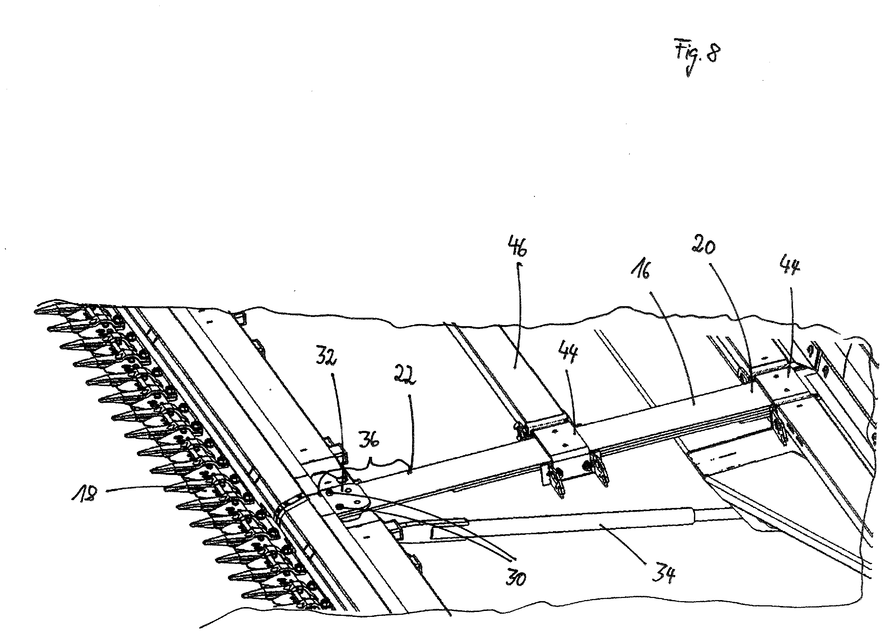

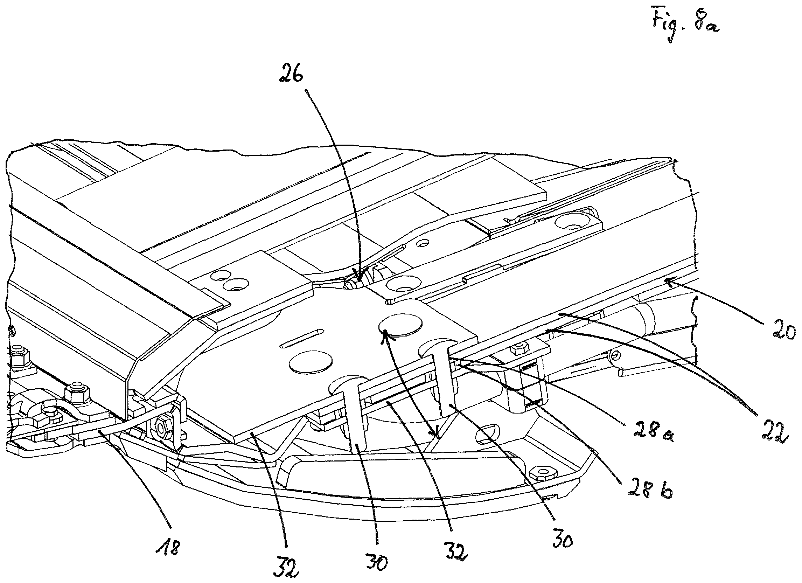

In Fig. 8 ist ein Ausschnitt eines Schneidwerks 4 im Bereich einer Schwinge 16 gezeigt. In dieser Ansicht ist ein Blattfederpaket 20 dargestellt, das aus mindestens vier Federblättern 22 zusammengesetzt ist. In dem gezeigten Ausführungsbeispiel reicht nur das oberste Federblatt 22 nach vorne bis in den Bereich der Schneidelemente 18, mit denen dieses verbunden ist. Zur Verbindung mit dem Schneidelement 18 ist auf das oberste Federblatt 22 eine Befestigungsplatte 32 aufgelegt. Auf der Unterseite des obersten Federblatts 22 befindet sich ebenfalls eine Befestigungsplatte 32, die in der gezeigten Ansicht aber nicht sichtbar ist. Die oberen und unteren Befestigungsplatten 32 sind durch Verbindungselemente 30 miteinander verbunden. Bei den Verbindungselementen 30 kann es sich beispielsweise um Nieten oder Schrauben oder andere Befestigungsmittel handeln. Damit die Verbindungselemente 30 die Befestigungsplatten 32 miteinander verbinden können, befindet sich in dem Federblatt 22 eine entsprechende Ausnehmung 28, durch die die Verbindungselemente 30 hindurchgeführt werden können.

Aus der Fig. 8 ist auch ersichtlich, dass an der Unterseite des Blattfederpakets 20 eine Zugstrebe 34 angebracht ist. Die Zugstrebe 34 ist mit ihrem vorderen Ende mit dem vorderen Abschnitt 36 des Blattfederpakets 20 verbunden. Die Zugstrebe erstreckt sich von dort nach hinten in Richtung des Rahmens 6, wo sie in einem Langloch 38 beweglich gehalten ist, das in Fig. 7 gezeigt ist. Die vorderen und hinteren Enden des Langlochs 38 bilden einen Anschlag für Bewegungen des Blattfederpakets 20, wenn dort die Zugstrebe bei Federbewegungen des Blattfederpakets 20 anschlägt.

Ebenfalls aus Fig. 7 ist ersichtlich, dass das Langloch 38 einen Sensor 40 aufweist, der über ein Hebelgestänge die Bewegungen der Zugstreben 34 im Langloch 38 erfasst. Die Sensoren 40 übermitteln ein der jeweiligen Schwenklage entsprechendes Lagesignal an eine mit den Sensoren 40 verbundene Auswerteelektronik 42.

Aus der Fig. 8 ist erkennbar, dass auf das Blattfederpaket 20 im Ausführungsbeispiel zwei Abstützelemente 44 aufgesetzt sind, die oberhalb des Blattfederpakets befindliche Förderflächen abstützen. In der Fig. 8 sind die Förderflächen nicht dargestellt, um nicht den Blick auf die Abstützelemente 44 zu beeinträchtigen. Die Förderflächen können auf die Abstützelemente 44 lose aufgelegt sein, so dass die Förderflächen durch die Abstützelemente 44 nur flächig abgestützt werden, die Förderflächen können aber auch fest mit den Abstützelemente 44 verbunden sein.

In Fig. 8 ist gezeigt, dass die Abstützelemente 44 benachbarter Blattfederpakete 20 durch einen oder mehrere schwenkbeweglich mit den Abstützelementen 44 verbundene Stege 46 verbunden werden können. Die Stege 46 erstrecken sich quer zur Arbeitsrichtung des Schneidwerks 4. Über Stege 46 kann beispielsweise vermieden werden, dass Förderbänder zwischen den Blattfederpaketen 20 durchhängen und dadurch das Erntegut in einer wellenförmigen Bewegung abfördern. Über die Abstützung mittels der Stege 46 bleibt ein Bandförderer in einer gleichen horizontalen Ebene. Die Stege 46 schränken auch die Beweglichkeit der Blattfederpakete 20 quer zur Fahrtrichtung ein.

In Fig. 8a ist eine vergrößerte Ausschnittansicht einer Verbindungszone 26 zwischen Federblättern 22 und den Schneidelementen 18 dargestellt. In diesem Ausführungsbeispiel reichen zwei Federblätter 22 bis in die Verbindungszone 26 hinein. Auf das obere Federblatt 22 ist eine Befestigungsplatte 32 von oben aufgelegt, auf das untere der beiden Federblätter 22 ist eine Befestigungsplatte 32 von unten aufgelegt. Damit das untere Federblatt 22 bei Schwingungsbewegungen des Blattfederpakets 20 in eine der durch den Doppelpfeil angedeuteten Bewegungsrichtungen Längendifferenzen zwischen dem oberen und unteren Blattfederpaket ausgleichen kann, sind die Ausnehmungen 28b im unteren Federblatt 22 im Gegensatz zu den Ausnehmungen 28a im oberen Federblatt 22 als Langlöcher ausgebildet, die eine Relativbewegung des unteren Federblatts 22 im Verhältnis zum oberen Federblatt 22 als Längenausgleich zulassen.

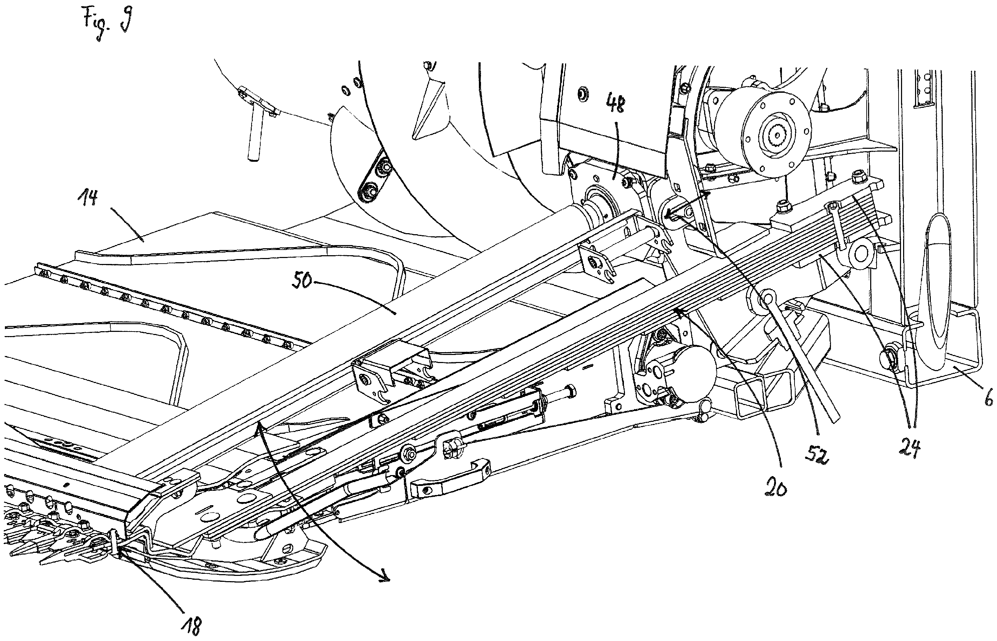

In Fig. 9 ist erkennbar, dass im Schneidwerk 4 seitlich versetzt zum hinteren Ende eines Blattfederpakets 20 ein Getriebe 48 in einem Langloch 52 gehalten ist. Längsbewegungen der Abtriebswelle 50, die sich aus Schwingungsbewegungen von benachbarten Blattfederpaketen 20 ergeben könnten, wie sie durch den in Fig. 9 eingezeichneten Doppelpfeil angedeutet sind, sind nun über die Halterung in dem Langloch 52 in Richtung des dort eingezeichneten Doppelpfeils ausgleichbar.

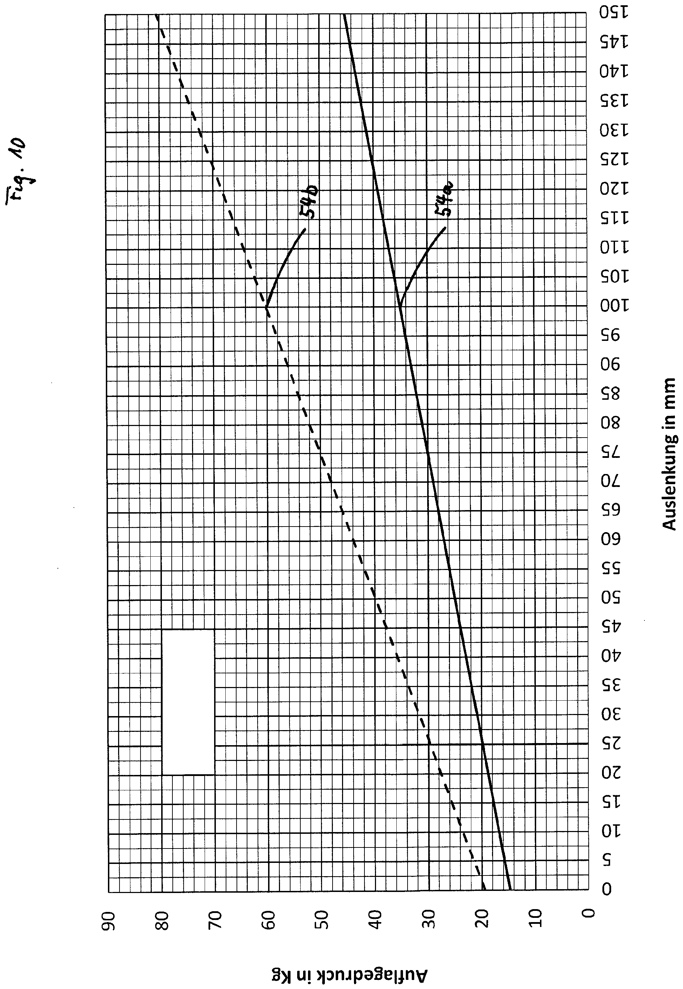

In Fig. 10 sind zwei mögliche Federkennlinien 54a, 54b von Schwingen gezeigt. Aus den beiden gezeigten Federkennlinien 54a, 54b ist erkennbar, dass das Blattfederpaket 20 einer Schwinge 16 so ausgelegt ist, dass sie bei einer Auslenkung eines daran befestigten Schneidelements 18 von beispielsweise 10 cm aus den aufgebauten Rückstellkräften einen Auflagedruck erzeugt, der bei ca. 35 kg - so die Federkennlinie 54 a - und 60 kg - so die Federkennlinie 54b - liegt. Nach einer Ausführung der Erfindung liegen die Federkennlinien des Blattfederpakets 20 einer Schwinge 16 in einem Bereich zwischen 15 kg und 80 kg. In einem Schneidwerk 4 können Blattfederpakete 20 mit unterschiedlichen Federkennlinien 54 verbaut sein. So können die dem Mittenband eines Draper-Schneidwerks nächsten Blattfederpakete 20 einen geringeren Auflagedruck, beispielsweise nach der Federkennlinie 54a erzeugen, weil diese bereits durch Antriebskomponenten und Rahmenteile stärker gewichtsmäßig belastet sind als andere Blattfederpakete 20, die dann eine Federkennlinie 54b mit höheren Auflagedrücken aufweisen, um dadurch die geringere Gewichtsbelastung dieser Blattfederpakete 20 auszugleichen. Im Ergebnis soll sich über die Arbeitsbreite des Schneidwerks 4 dadurch ein möglichst gleichmäßiger Auflagedruck ergeben, mit dem das Schneidwerk 4 auf der Bodenoberfläche gleitet.

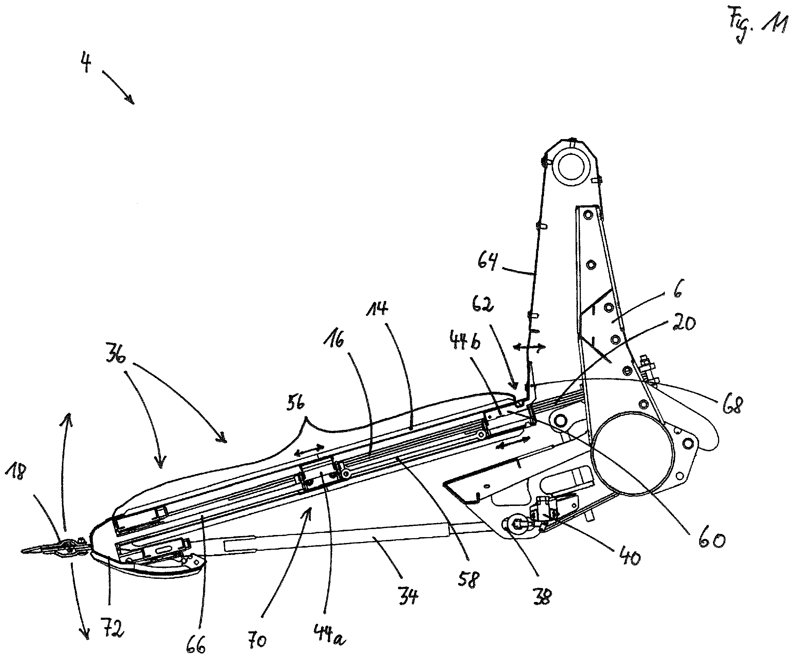

In Fig. 11 ist eine Schnittansicht durch das Schneidwerk 4 gezeigt. Als Förderorgan 14 ist in dem in Fig. 11 gezeigten Ausführungsbeispiel ein umlaufender Bandförderer gezeigt, der auf seiner Oberseite die Förderfläche 56 ausbildet. Bei Aufwärts- und Abwärtsbewegungen des Schneidelements 18 und der Schwinge 16, die durch entsprechende Pfeile angedeutet sind, ergeben sich Veränderungen in der räumlichen Lage der Förderfläche 56. Die Förderfläche 56 muss auch in einer veränderten räumlichen Lage abgestützt und in ihrer Förderbewegung geführt werden. Dazu sind die Abstützelemente 44a, 44b längsbeweglich an der Schwinge 16 befestigt, was durch die eingezeichneten Doppelpfeile kenntlich gemacht ist. Die Bewegungen des längsbeweglichen Abstützelements 44b werden über die Koppelstange 58 übertragen, die im Ausführungsbeispiel mit ihrem hinteren Ende am Abstützelement 44b und mit ihrem vorderen Ende am Abstützelement 44a angreift. Das Abstützelement 44a ist über eine starre Drehmomentstütze 66 an dem vorderen Ende des Schneidwerks 4 abgestützt. Die Drehmomentstütze wird auf diese Weise wie eine weitere Koppelstange 58. Die Koppelstange 58 und die Drehmomentstütze 66 übertragen Bewegungen des Schneidelements 18 in Längsrichtung auf die Abstützelemente 44a, 44b.

Die Abstützelemente 44a, 44b können durch ihre Längsbeweglichkeit den Bewegungen der Förderfläche 56 in einer Richtung entlang der Schwinge 16 folgen. Die Abstützung der Förderfläche 56 kann auf diese Weise auch bei Aufwärts- und Abwärtsbewegungen des Schneidelements 18 aufrechterhalten werden. Um die Förderfläche 56 bei Aufwärts- und Abwärtsbewegungen der Schwinge 16 und des Schneidelements 18 zu halten und zu führen, ist auf das hintere Abstützelement 44 ein Halteelement 60 aufgesetzt, das im Ausführungsbeispiel eine V-förmige Nut als Mitnehmer 62 aufweist. Der Bandförderer ist auf der Innenseite seines Förderbands mit einem anvulkanisierten Profil versehen, das komplementär zur Form des Mitnehmers geformt ist und in den Querschnitt der V-förmigen Nut als Mitnehmer 62 eingreift. Wenn sich das Abstützelement 44b entlang der Schwinge 16 bewegt, nimmt der Mitnehmer 62 mit seiner V-förmigen Nut den Bandförderer mit und verlagert diesen entsprechend der Längsbewegung des Abstützelements 44b nach vorne oder hinten. Dadurch bleibt die Vorderkante des Bandförderers in Längsrichtung der Schwinge 16 immer in einer abdichtenden Anlage im Verhältnis zum Schneidelement 18, so dass an der Vorderkante des Bandförderers bei Bewegungen der Schwinge 16 und/oder des Schneidelements 18 keine Spalte entstehen, die Gutverluste und einen Materialaufbau verursachen könnten. Wird die Förderfläche 56 nicht durch einen umlaufenden Bandförderer, sondern ein starres Blech gebildet, kann der Mitnehmer auch als ein einfaches Band, Scharnier oder dergleichen ausgebildet sein.

Das Halteelement 60 ist mit einem Steg 68 versehen, durch den Erntegutverluste über den hinteren Rand des Bandförderers vermieden werden. Der Steg 68 als Bestandteil des Halteelements 60 ist außerdem mit der beweglichen Rückwand 64 verbunden, die den Förderweg des Ernteguts über das Schneidwerk 4 nach hinten hin abstützt und dieses führt. Die bewegliche Rückwand ist über den Steg 68 vom Halteelement 60 gehalten. Die Beweglichkeit der beweglichen Rückwand 64 ist ebenfalls durch einen Doppelpfeil angedeutet. Bei Bewegungen des längsbeweglichen Abstützelements 44b nimmt das Halteelement 60 die bewegliche Rückwand 64 in der jeweiligen Bewegungsrichtung mit. Da das Halteelement 60 im Übergangsbereich zwischen der Förderfläche 56 und der Rückwand 64 eine geschlossene Oberfläche aufweist, dichtet es den Übergang zwischen der Förderfläche 56 und der Rückwand 64 ab.

In Fig. 11 ist erkennbar, dass der vordere Abschnitt 36 der Schwinge 16 an dem mittleren Abschnitt 70 der Schwinge 16 über eine Drehmomentstütze 66 abgestützt ist. Das vordere Ende der Drehmomentstütze 66 ist mit dem Messerwinkel 72 verbunden, an dem das Schneidelement 18 befestigt ist. Das hintere Ende der Drehmomentstütze 66 ist mit dem Abstützelement 44a verbunden, das seinerseits an der Schwinge 16 befestigt ist.

### Bezugsziffernliste

- 2: Erntemaschine
- 4: Schneidwerk
- 6: Rahmen (Schneidwerk)
- 8: Anbaurahmen
- 10: Einzugskanal
- 12: Anbaumittel
- 14: Förderorgan
- 16: Schwinge
- 17: Rückwand
- 18: Schneidelement (Messerbalken)
- 20: Blattfederpaket
- 22: Federblatt
- 24: Spannelement
- 26: Verbindungszone
- 28: Ausnehmung
- 30: Verbindungselement
- 32: Befestigungsplatte
- 34: Zugstrebe
- 36: vorderer Abschnitt
- 38: Langloch (Zugstrebe)
- 40: Sensor
- 42: Auswerteelektronik
- 44: Abstützelement
- 46: Steg
- 48: Getriebe
- 50: Abtriebswelle
- 52: Langloch (Getriebe)
- 54: Federkennlinie
- 56: Förderfläche
- 58: Koppelstange
- 60: Halteelement
- 62: Mitnehmer
- 64: Rückwand
- 66: Drehmomentstütze
- 68: Steg
- 70: mittlerer Abschnitt
- 72: Messerwinkel

## Patentansprüche

1. Schneidwerk (4) zum Anbau an eine Erntemaschine (2) mit einem sich zumindest im Wesentlichen über die Arbeitsbreite des Schneidwerks (4) erstreckenden Rahmen (6), der einen Anbaurahmen (8) mit Anbaumitteln (12) zur Verbindung mit einem Einzugskanal (10) einer Erntemaschine (2) aufweist, wobei der Rahmen (6) in Arbeitsrichtung weisende Schwingen (16) aufweist, an deren vorderen Enden Schneidelemente (18) zum Schneiden des Ernteguts befestigt sind, **dadurch gekennzeichnet, dass** mehrere oder alle Schwingen (16) jeweils als ein aus mehreren Federblättern (22) zusammengesetztes Blattfederpaket (20) ausgebildet sind, mehrere oder alle flach aufeinanderliegenden Federblätter (22) als Blattfederpaket (20) an ihrem rahmenseitigen Ende gemeinsam zwischen Spannelementen (24) am Rahmen (6) gehalten sind, nur ein oder mehrere der im oberen Bereich des Blattfederpakets (20) angeordneten Federblätter (22) mit den Schneidelementen (18) verbunden sind und ein oder mehrere der zwischen den Spannelementen (24) am Rahmen (6) gehaltenen und im unteren Bereich des Blattfederpakets (20) angeordnete Federblätter (22) in Arbeitsrichtung gesehen vor der Verbindungzone (26) der im oberen Bereich des Blattfederpakets (20) angeordneten Federblätter (22) mit den Schneidelementen (18) enden.

2. Schneidwerk (4) nach Anspruch 1, **dadurch gekennzeichnet, dass** zumindest eines oder mehrere der an ihrem rahmenseitigen Ende gemeinsam zwischen Spannelementen (24) am Rahmen (6) gehaltenen Federblätter (22) mit den Schneidelementen (18) verbunden ist/sind und Ausnehmungen (28) zur Durchführung von Verbindungselementen (30) aufweisen, die auf der Ober- und Unterseite des Federblatts (22) oder der Federblätter (22) aufgelegte Befestigungsplatten (32) zur Anbindung der Schneidelemente (18) an die Schwinge (16) miteinander verbinden.

3. Schneidwerk (4) nach Anspruch 1 oder 2, **dadurch gekennzeichnet, dass** an der Unterseite der Blattfederpakete (20) jeweils eine Zugstrebe (34) angebracht ist, die mit ihrem vorderen Ende am vorderen Abschnitt (36) eines Blattfederpakets (20) mit diesem verbunden ist und sich von dort nach hinten in Richtung des Rahmens (6) erstreckt, wo sie in einem Langloch (38) beweglich gehalten ist und die vorderen und hinteren Enden des Langlochs (38) einen Anschlag für Bewegungen des Blattfederpakets (20) bilden.

4. Schneidwerk (4) nach Anspruch 3, **dadurch gekennzeichnet, dass** das Schneidwerk (4) Sensoren (40) aufweist, die die Bewegungen der Zugstreben (34) in den jeweiligen Langlöchern (38) erfassen und die Sensoren (40) ein der jeweiligen Schwenklage entsprechendes Lagesignal an eine mit den Sensoren (40) verbundene Auswerteelektronik (42) übermitteln.

5. Schneidwerk (4) nach einem der vorhergehenden Ansprüche, **dadurch gekennzeichnet, dass** auf einem oder mehreren Blattfederpaketen (20) eine oder mehrere Abstützelemente (44) aufgesetzt sind, die oberhalb des Blattfederpakets (20) befindliche Förderflächen (56) abstützen.

6. Schneidwerk (4) nach Anspruch 5, **dadurch gekennzeichnet, dass** zumindest eines der Abstützelemente (44a, 44b) längsbeweglich mit der Schwinge (16) verbunden ist.

7. Schneidwerk nach Anspruch 6, **dadurch gekennzeichnet, dass** das längsbewegliche Abstützelement (44a, 44b) in seiner Bewegung durch eine oder mehrere Koppelstangen (58) beweglich angetrieben ist, die im vorderen Abschnitt (36) der Schwinge (16) oder des Schneidelements (18) abgestützt sind.

8. Schneidwerk nach Anspruch 6 oder 7, **dadurch gekennzeichnet, dass** mit dem längsbeweglichen Abstützelement (44b) ein Halteelement (60) verbunden ist, das die bewegliche Förderfläche (56) begrenzt und über Mitnehmer (62) führt.

9. Schneidwerk (4) nach einem der vorhergehenden Ansprüche 6 bis 8, **dadurch gekennzeichnet, dass** mit dem längsbeweglichen Abstützelement (44) ein Halteelement (60) verbunden ist, das eine bewegliche Rückwand (64) des Förderwegs des Ernteguts über das Schneidwerk (4) abstützt und führt.

10. Schneidwerk (4) nach einem der vorhergehenden Ansprüche 8 oder 9, **dadurch gekennzeichnet, dass** das Haltelement (60) den Übergang zwischen der Förderfläche (56) und der Rückwand (64) abdichtet.

11. Schneidwerk (4) nach einem der vorhergehenden Ansprüche 5 bis 10, **dadurch gekennzeichnet, dass** Abstützelemente (44) benachbarter Blattfederpakete (20) durch einen oder mehrere schwenkbeweglich mit den Abstützelementen (44) verbundene Stege (46) verbunden sind.

12. Schneidwerk (4) nach einem der vorhergehenden Ansprüche, **dadurch gekennzeichnet, dass** der vordere Abschnitt (36) einer Schwinge (16) an dem mittleren Abschnitt der Schwinge (16) über eine Drehmomentstütze (66) abgestützt ist.

13. Schneidwerk (4) nach einem der vorhergehenden Ansprüche, **dadurch gekennzeichnet, dass** ein Getriebe (48) mit einer damit verbundenen Abtriebswelle (50) zum Antrieb der Schneidelemente (18) und/oder von Förderorganen (14) zur Beförderung des Ernteguts im Rahmen (6) in einem Langloch (52) in Längsrichtung beweglich gehalten ist.

14. Schneidwerk (4) nach einem der vorhergehenden Ansprüche, **dadurch gekennzeichnet, dass** die Federkennlinie (54) der Federblätter (22) eines Blattfederpakets (20) einer Schwinge (16) so ausgelegt ist, dass sie bei einer Auslenkung eines daran befestigten Schneidelements (18) von 10 cm aus den aufgebauten Rückstellkräften einen Auflagedruck erzeugt, der in einem Bereich zwischen 15 kg und 80 kg liegt.

15. Schneidwerk nach Anspruch 14, **dadurch gekennzeichnet, dass** in einem Schneidwerk (4) Blattfederpakete (20) verbaut sind, die unterschiedliche Federkennlinien aufweisen.

## Claims

1. Cutterbar (4) for attachment to a harvesting machine (2), having a frame (6) extending at least substantially over the working width of the cutterbar (4), which has a mounting frame (8) with mounting means (12) for connection to a feeder housing (10) of the harvesting machine (2), wherein the frame (6) has swing arms (16) pointing in the working direction, at the front ends of which cutting elements (18) for cutting the crop are attached, **characterized in that** several or all of the swing arms (16) are each designed as a leaf spring package (20) composed of several leaf springs (22), several or all leaf springs (22) lying flat on top of one another are held together as a leaf spring package (20) at their frame-side end between tensioning elements (24) on the frame (6), only one or more of the leaf springs (22) arranged in the upper region of the leaf spring package (20) are connected with the cutting elements (18) and one or more of the leaf springs (22) held between the tensioning elements (24) on the frame (6) and arranged in the lower region of the leaf spring package (20) end in front of the connection zone (26) of the leaf springs (22) arranged in the upper region of the leaf spring package (20) with the cutting elements (18), as viewed in the working direction.

2. Cutterbar (4) according to claim 1, **characterized in that** at least one or more of the leaf springs (22) held jointly between tensioning elements (24) on the frame (6) at their frame-side end is/are connected with the cutting elements (18) and have recesses (28) for the passage of connecting elements (30) which connect fastening plates (32) placed on the upper and lower sides of the leaf spring (22) or the leaf springs (22) to one another for connecting the cutting elements (18) to the swing arm (16).

3. Cutterbar (4) according to claim 1 or 2, **characterized in that** a tension strut (34) is attached to the underside of each of the leaf spring packages (20), which is connected with the front section (36) of a leaf spring package (20) at its front end and extends from there rearwards in the direction of the frame (6), where it is held movably in an elongated hole (38) and the front and rear ends of the elongated hole (38) form a stop for movements of the leaf spring assembly (20).

4. Cutterbar (4) according to claim 3, **characterized in that** the cutterbar (4) has sensors (40) which detect the movements of the tension struts (34) in the respective elongated holes (38) and the sensors (40) transmit a position signal corresponding to the respective swivel position to an evaluation electronics (42) connected with the sensors (40).

5. Cutterbar (4) according to one of the preceding claims, **characterized in that** one or more support elements (44) are placed on one or more leaf spring packages (20), which support conveying surfaces (56) located above the leaf spring package (20).

6. Cutterbar (4) according to claim 5, **characterized in that** at least one of the support elements (44a, 44b) is connected with the swing arm (16) so as to be longitudinally movable.

7. Cutterbar according to claim 6, **characterized in that** the longitudinally movable support element (44a, 44b) is movably driven in its movement by one or more coupling rods (58) which are supported in the front section (36) of the swing arm (16) or of the cutting element (18).

8. Cutterbar according to claim 6 or 7, **characterized in that** a holding element (60) is connected with the longitudinally movable support element (44b), which element delimits the movable conveying surface (56) and guides it via drivers (62).

9. Cutterbar (4) according to one of the preceding claims 6 to 8, **characterized in that** a retaining element (60) is connected with the longitudinally movable support element (44), which supports and guides a movable rear wall (64) of the conveying path of the crop via the cutterbar (4).

10. Cutterbar (4) according to one of the preceding claims 8 or 9, **characterized in that** the retaining element (60) seals the transition between the conveying surface (56) and the rear wall (64).

11. Cutterbar (4) according to one of the preceding claims 5 to 10, **characterized in that** support elements (44) of adjacent leaf spring packages (20) are connected by one or more webs (46) pivotably connected with the support elements (44).

12. Cutterbar (4) according to one of the preceding claims, **characterized in that** the front section (36) of a swing arm (16) is supported on the middle section of the swing arm (16) via a torque bracket (66).

13. Cutterbar (4) according to one of the preceding claims, **characterized in that** a gear (48) with an output shaft (50) connected thereto for driving the cutting elements (18) and/or conveyor members (14) for conveying the crop is held in the frame (6) so as to be movable in the longitudinal direction in an elongated hole (52).

14. Cutterbar (4) according to one of the preceding claims, **characterized in that** the spring characteristic (54) of the leaf springs (22) of a leaf spring package (20) of a swing arm (16) is designed in such a way that, when a cutting element (18) attached thereto is deflected by 10 cm, it generates a contact pressure from the built-up restoring forces which is in a range between 15 kg and 80 kg.

15. Cutterbar according to claim 14, **characterized in that** leaf spring packages (20) which have different spring characteristics are installed in a cutterbar (4).

## Revendications

1. Mécanisme de coupe (4) destiné à être monté sur une machine de récolte (2), avec un cadre (6) qui s'étend au moins essentiellement sur la largeur de travail du mécanisme de coupe (4), qui présente un cadre de montage (8) avec des moyens de montage (12) pour la liaison avec un canal d'alimentation (10) d'une machine de récolte (2), le cadre (6) présentant des bras oscillants (16) orientés dans la direction de travail, aux extrémités avant desquels sont fixés des éléments de coupe (18) pour couper le produit récolté, **caractérisé en ce que** plusieurs ou tous les bras oscillants (16) sont réalisés chacun sous la forme d'un paquet de ressorts à lames (20) composé de plusieurs lames de ressort (22), plusieurs ou toutes les lames de ressort (22) superposées à plat sont maintenues en commun sur le cadre (6) à leur extrémité côté cadre entre des éléments de serrage (24) sous forme de paquet de ressorts à lames (20), seulement une ou plusieurs des lames de ressort (22) agencées dans la zone supérieure du paquet de ressorts à lames (20) sont reliées aux éléments de coupe (18) et une ou plusieurs des lames de ressort (22) maintenues entre les éléments de serrage (24) sur le cadre (6) et agencées dans la zone inférieure du paquet de ressorts à lames (20) se terminent, vues dans la direction de travail, avant la zone de liaison (26) des lames de ressort (22) agencées dans la zone supérieure du paquet de ressorts à lames (20) avec les éléments de coupe (18).

2. Mécanisme de coupe (4) selon la revendication 1, **caractérisé en ce qu'**au moins une ou plusieurs des lames de ressort (22) maintenues en commun sur le cadre (6) à leur extrémité côté cadre entre des éléments de serrage (24) est/sont reliée(s) aux éléments de coupe (18) et présente(nt) des évidements (28) pour le passage d'éléments de liaison (30) qui relient entre elles des plaques de fixation (32) posées sur le côté supérieur et le côté inférieur de la lame de ressort (22) ou des lames de ressort (22) pour attacher les éléments de coupe (18) au bras coulissant (16).

3. Mécanisme de coupe (4) selon la revendication 1 ou 2, **caractérisé en ce que** sur le côté inférieur de chacun des paquets de ressorts à lames (20) est montée une barre de traction (34) qui est reliée par son extrémité avant à la section avant (36) d'un paquet de ressorts à lames (20) et qui s'étend de là vers l'arrière en direction du cadre (6), où elle est maintenue mobile dans un trou oblong (38) et les extrémités avant et arrière du trou oblong (38) forment une butée pour les mouvements du paquet de ressorts à lames (20).

4. Mécanisme de coupe (4) selon la revendication 3, **caractérisé en ce que** le mécanisme de coupe (4) présente des capteurs (40) qui détectent les mouvements des barres de traction (34) dans les trous oblongs (38) respectifs et les capteurs (40) transmettent un signal de position correspondant à la position de pivotement respective à un système électronique d'évaluation (42) relié aux capteurs (40).

5. Mécanisme de coupe (4) selon l'une quelconque des revendications précédentes, **caractérisé en ce qu'**un ou plusieurs éléments de soutien (44) sont placés sur un ou plusieurs paquets de ressorts à lames (20), lesquels soutiennent des surfaces de transport (56) se trouvant au-dessus du paquet de ressorts à lames (20).

6. Mécanisme de coupe (4) selon la revendication 5, **caractérisé en ce qu'**au moins un des éléments de soutien (44a, 44b) est relié au bras oscillant (16) de manière mobile longitudinalement.

7. Mécanisme de coupe selon la revendication 6, **caractérisé en ce que** l'élément de soutien mobile longitudinalement (44a, 44b) est entraîné de manière mobile dans son mouvement par une ou plusieurs biellettes (58) qui sont soutenues dans la section avant (36) du bras oscillant (16) ou de l'élément de coupe (18).

8. Mécanisme de coupe selon la revendication 6 ou 7, **caractérisé en ce qu'**un élément de maintien (60) est relié à l'élément de soutien (44b) mobile longitudinalement, lequel délimite la surface de transport mobile (56) et la guide par l'intermédiaire d'entraîneurs (62).

9. Mécanisme de coupe (4) selon l'une quelconque des revendications 6 à 8 précédentes, **caractérisé en ce qu'**un élément de maintien (60) est relié à l'élément de soutien (44) mobile longitudinalement, lequel élément de maintien soutient et guide une paroi arrière mobile (64) du trajet de transport du produit récolté au-dessus du mécanisme de coupe (4).

10. Mécanisme de coupe (4) selon l'une quelconque des revendications 8 ou 9 précédentes, **caractérisé en ce que** l'élément de maintien (60) assure l'étanchéité de la transition entre la surface de transport (56) et la paroi arrière (64).

11. Mécanisme de coupe (4) selon l'une quelconque des revendications 5 à 10 précédentes, **caractérisé en ce que** des éléments de soutien (44) de paquets de ressorts à lames (20) voisins sont reliés par une ou plusieurs entretoises (46) reliées de manière pivotante aux éléments de soutien (44).

12. Mécanisme de coupe (4) selon l'une quelconque des revendications précédentes, **caractérisé en ce que** la section avant (36) d'un bras oscillant (16) est soutenue sur la section centrale du bras oscillant (16) par l'intermédiaire un soutien de couple (66).

13. Mécanisme de coupe (4) selon l'une quelconque des revendications précédentes, **caractérisé en ce qu'**un engrenage (48) avec un arbre de sortie (50) relié à celui-ci pour l'entraînement des éléments de coupe (18) et/ou d'organes de transport (14) pour le transport du produit récolté est maintenu dans le cadre (6) de manière mobile dans la direction longitudinale dans un trou oblong (52).

14. Mécanisme de coupe (4) selon l'une quelconque des revendications précédentes, **caractérisé en ce que** la caractéristique de ressort (54) des lames de ressort (22) d'un paquet de ressorts à lames (20) d'un bras oscillant (16) est conçue de telle sorte que, pour une déviation de 10 cm d'un élément de coupe (18) qui y est fixé, elle génère, à partir des forces de rappel constituées, une pression d'appui qui se situe dans une plage comprise entre 15 kg et 80 kg.

15. Mécanisme de coupe selon la revendication 14, **caractérisé en ce que** des paquets de ressorts à lames (20) sont montés dans un mécanisme de coupe (4), lesquels présentent des caractéristiques de ressort différentes.
